# EUROPÄISCHE PATENTSCHRIFT

(11) **EP 0 842 809 B1**
(45) Veröffentlichungstag und Bekanntmachung des Hinweises auf die Patenterteilung: **03.05.2000**
(21) Anmeldenummer: 96118322.5
(22) Anmeldetag: 15.11.1996
(51) Int. Cl.: B60N 2/24

(54) **Erweiterbarer Fahrgastsitz**
Expandable passenger seat
Siège de passager expansible

(43) Veröffentlichungstag der Anmeldung: 20.05.1998
(73) Patentinhaber: Vogel Industrie GmbH, 76228 Karlsruhe (DE)
(72) Erfinder: Vogel, Heiner, 76228 Karlsruhe (DE); Weiler, Klaus, 76228 Karlsruhe (DE)
(74) Vertreter: Trappenberg, Hans

(56) Entgegenhaltungen:
- EP-A- 0 331 241
- EP-A- 0 627 338
- EP-A- 0 680 843
- GB-A- 2 035 790

## Beschreibung

Die Erfindung betrifft einen Fahrgastsitz für Personenbeförderungsfahrzeuge, welcher auf einem sich länglich erstreckenden ersten Träger, auf dem ein erstes Sitzteil des Fahrgastsitzes befestigt ist, angeordnet ist.

Ein derartiger Fahrgastsitz ist beispielsweise aus der EP 0627338 A 1 bekannt. Der bekannte Sitz ist auf einem kastenförmigen Profil befestigt, welches sich quer zum Sitz erstreckt. Der Kastenholm ist einerseits direkt mit der Seitenwand des Fahrzeuges verbunden und andererseits über abgewinkelte Schrägstützen mit der Seitenwand unterhalb der direkten Befestigung verbunden. Die Länge des Kastenholmes ist abhängig davon, ob auf ihm ein einzelner Sitz oder zwei nebeneinander angeordnete Sitze beziehungsweise ein Doppelsitz angeordnet werden soll. Ist die Länge des Kastenholms so bemessen, daß er einen einzelnen Sitz aufnehmen kann, so ist es nicht mehr möglich einen weiteren Sitz hinzuzufügen. Wollte man einen weiteren Sitz hinzufügen, so müßte die gesamte Tragevorrichtung ausgewechselt werden. Dasselbe gilt umgekehrt auch dann, wenn von zwei nebeneinander angeordneten Sitzen einer entfernt werden soll.

Aus der dem Oberbegriff entsprechenden GB 2 035 790 A ist eine Trägerstruktur für eine Fahrgastsitz bekannt, welcher zwei Längsrohre aufweist, auf welchen Sitzteile angeordnet werden können. Die Längsrohre sind auf Stützfüßen angeordnet. Zur Verbindung der Längsrohre mit den Stützfüßen weisen die Längsrohre sowie die Stützfüßen Öffnungen auf, durch welche Bolzen gesteckt sind. Hierdurch sind die Längsrohre in unterschiedlichen Positionen auf den Stützfüßen anordenbar.

Es ist Aufgabe der Erfindung einen eingangs genannten Fahrgastsitz so auszubilden, daß auf einfache Art und Weise gegebenenfalls ein zweiter Sitz hinzugefügt oder entfernt werden kann.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist eine Adaptionseinheit vorgesehen, mittels der ein zweiter Träger, auf dem ein Sitzteil eines zweiten Fahrgastsitzes befestigt ist, mit dem ersten Träger verbindbar ist. Durch die Adaptionseinheit ist es möglich, den zweiten Träger mit dem ersten Träger fest zu verbinden. Somit kann auf einfache Weise zu dem ersten Sitz ein zweiter Sitz hinzugefügt werden.

In vorteilhafter Weise sind die Träger als Kastenholme ausgebildet, wobei die Adaptionseinheit formschlüssig in die Kastenholme einsteckbar ist. Auf diese Art und Weise läßt sich die Adaptionseinheit einfach mit den Kastenholmen verbinden. Die Größe der Adaptionseinheit, das heißt die Länge, mit der die Adaptionseinheit in die Kastenholme hineinragt, ist so bemessen, daß durch die auf die Kastenholme wirkenden Querkräfte die Kastenholme an der Verbindungsstelle nicht beschädigt werden.

Erfindungsgemäß besteht die Adaptionseinheit aus einem ersten Teil und einem zweiten Teil, welche jeweils Mittel zum stirnseitigen Verbinden der beiden Teile aufweisen. Hierdurch ist es möglich, die Teile der Adaptionseinheit fest mit den jeweiligen Kastenholmen zu verbinden. Die Verbindung kann beispielsweise mittels Schrauben oder Nieten geschehen. Zur stirnseitigen Verbindung der beiden Teile der Adaptionseinheit kann der erste Teil der Adaptionseinheit mit einem stegförmigen Vorsprung versehen sein, welcher von einem entsprechend ausgebildeten hakenförmigen Vorsprung des zweiten Teils der Adaptionseinheit umgriffen wird. Zur Fixierung der Umgreifung kann eine Schraube vorgesehen werden, welche verhindert, daß die hakenförmige Umgreifung des Steges sich unbeabsichtigt löst.

Eine weitere vorteilhafte Ausgestaltung der Erfindung weist Mittel auf, mittels der die beiden Teile der Adaptionseinheit gegen Verschieben gesichert sind. Hierzu kann der erste Teil der Adaptionseinheit an seiner dem zweiten Teil der Adaptionseinheit zugewandten Stirnseite eine Ausnehmung aufweisen, in der ein quaderförmiges Stück angeordnet ist. Das quaderförmige Stück ist so ausgebildet, daß es etwa nur zur Hälfte in der Ausnehmung des ersten Teils der Adapitonseinheit sitzt. Das zweite Teil der Adaptionseinheit weist eine Ausnehmung auf, in die der aus dem ersten Teil der Adaptionseinheit herausragende Bereich des Qauders formschlüssig eingreift.

Bei einer weiteren vorteilhaften Ausführungsform der Erfindung ist vorgesehen, daß die sich gegenüberstehenden Stirnseiten der beiden Teile der Adaptionseinheit zu der den Sitz tragenden Oberfläche des Kastenholms etwa einen Winkel von 80 Grad beziehungsweise 100 Grad aufweisen und daß die Mittel zum stirnseitigen Verbinden der beiden Teile als Steg und als Haken ausgebildet sind, wobei die sich gegenüberstehenden Flächen des Steges und des Hakens etwa in einem Winkel von 80 Grad zu der den Sitz tragenden Oberfläche des Kastenholms verlaufen. Durch die derart ausgebildeten Stirnseiten der beiden Teile der Adaptionseinheit und sich gegenüberstehenden Flächen des Steges und des Hakens wird erreicht, daß die Flächen etwa in einem Winkel von 20 Grad zueinander verlaufen, wodurch beim Verbinden der beiden Teile der Adaptionseinheit eine Zugwirkung der beiden Teile zueinander ausgeübt wird.

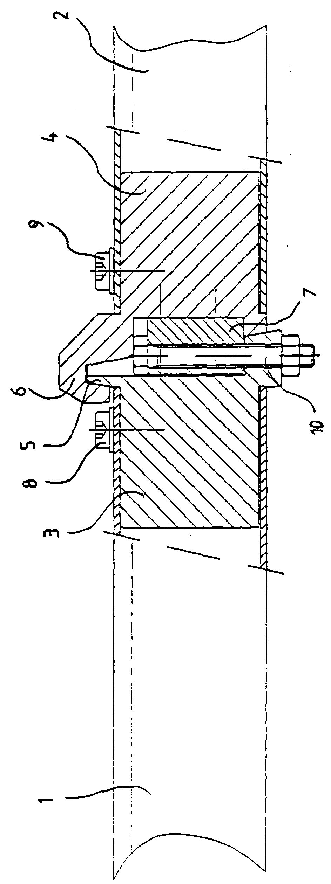

Weitere Merkmale und Vorteile der vorliegenden Erfindung ergebens ich aus der nachfolgenden Beschreibung eines besonderen Ausführungsbeispiels unter Bezugnahme auf die Zeichnung.

Es zeigt die einzige Figur eine mittels einer erfindungsgemäßen Adaptionseinheit bewirkten Verbindung von zwei Trägern für Fahrgastsitze.

Ein erster als Kastenholm ausgebildeter Träger nimmt das nicht gezeigte Sitzteil eines ersten Fahrgastsitzes auf. Ein zweiter als Kastenholm ausgebildeter Träger 2, welcher ebenfalls ein nicht gezeigtes Sitzteil eines zweiten Fahrgastsitzes aufnimmt, ist mit dem ersten Träger 1 verbunden. Zur Verbindung der beiden Träger 1 und 2 ist an der der Fahrzeugwand abgewandten Seite des Kastenholms formschlüssig ein erstes Teil 3 einer Adaptionseinheit eingeführt. An dem dem ersten Träger 1 gegenüberstehenden Ende des Trägers 2 ist in den Träger 2 ein zweites Teil 4 der Adaptionseinheit 3, 4 formschlüssig eingeführt. Zur Fixierung der beiden Teile 3, 4 der Adaptionseinheit sind die Teile 3, 4 mittels Schrauben 8, 9 mit den Trägern 1, 2 verbunden.

Das erste Teil 3 der Adaptionseinheit weist an seiner dem zweiten Teil 4 der Adaptionseinheit gegenüberstehenden Stirnseite einen sich in der Zeichnung nach oben erstreckenden Steg 5 auf. Der Steg 5 ist konisch ausgebildet, wobei er an seinem in der Zeichnung oberen Ende seine schmalste Stelle hat.

Das zweite Teil 4 der Adaptionseinheit weist an seiner dem ersten Teil 3 der Adaptionseinheit gegenüberstehenden Stirnfläche einen sich in der Zeichnung nach oben erstreckenden hakenförmigen Vorsprung 6 auf. Der hakenförmige Vorsprung 6 ist so ausgebildet, daß er bei sich berührenden Stirnflächen der beiden Teile 3, 4 der Adaptionseinheit den Steg 5 des ersten Teils 3 formschlüssig umgreift. Hierzu ist die dem Steg 5 gegenüberstehende Fläche des Hakens 6 schräg verlaufend ausgebildet. Die beiden sich gegenüberstehenden Flächen des Steges 5 und des Hakens 6 weisen zu der den Sitz tragenden Oberfläche des Kastenholms 1 etwa einen Winkel von 100 Grad auf.

Die sich gegenüberstehenden Stirnflächen der beiden Teile 3, 4 der Adaptionseinheit verlaufen ebenfalls schräg und weisen zu der den Sitz tragenden Oberfläche des Kastenholms 2 einen Winkel von etwa 100 Grad auf. Die beiden sich gegenüberstehenden Stirnflächen der beiden Teile 3, 4 und die sich gegenüberstehenden Flächen des Steges 5 und des Hakens 6 weisen somit einen Winkel von etwa 20 Grad zueinander auf. Hierdurch entsteht ein Keil, der bewirkt, daß bei Umgreifung des Hakens 6 um den Steg 5 auf die beiden Teile 3, 4 der Adaptionseinheit eine Zugkraft zueinander ausgeübt wird. Durch Belastung des zweiten Trägers 2 wird die Zugkraft vergrößert, so daß sich eine sehr feste spielfreie Verbindung der beiden Träger 1, 2 ergibt.

In der Stirnseite des zweiten Teils 4 der Adaptionseinheit ist eine Ausnehmung vorhanden, in der ein quaderförmiges Sicherungsstück 7 befestigt ist. Das quaderförmige Sicherungsstück 7 befindet sich etwa zur Hälfte in der Ausnehmung des zweiten Teils 4 der Adaptionseinheit. Der erste Teil 3 der Adaptionseinheit weist ebenfalls eine Ausnehmung auf, in die der aus dem zweiten Teil 4 der Adaptionseinheit hervorstehende Teile des SicherungsStückes 7 in seitlicher Richtung formschlüssig eingreift. Das Sicherungsstück 7 läßt sich somit nur in senkrechter Richtung in der Ausnehmung des ersten Teils 3 der Adaptionseinheit verschieben. Die beiden Teile 3, 4 der Adaptionseinheit sind somit durch das Sicherungsstück 7 gegen seitliches Verschieben gesichert. Darüber hinaus wird durch die Führung des Sicherungsstückes 7 eine leichtere Ankopplung des zweiten Trägers 2 an den ersten Träger 1 ermöglicht.

In dem Sicherungsstück 7 ist eine Schraube 10 angeordnet, welche sich nach unten über die Oberfläche des zweiten Teils 4 der Adaptionseinheit erstreckt. Das erste Teil 3 der Adaptionseinheit weist an seiner Stirnfläche am unteren Ende einen buchsenförmigen Vorsprung auf, durch den sich die Schraube 10 bei verbundenen Teilen 3, 4 der Adaptionseinheit erstreckt. Hierdurch ist es möglich den hakenförmigen Vorsprung 6 im den Steg 5 übergreifenden Zustand zu fixieren. Durch die Schraube 10 wird der hakenförmige Vorsprung 6 über den Steg 5 soweit nach unten gezogen, bis sich aufgrund des keilförmigen Verlaufs der sich gegenüberstehenden Stirnflächen und der sich gegenüberstehenden Fläche des Hakens 6 und des Steges 5 eine feste Verklemmung ergibt.

## Patentansprüche

1. Fahrgastsitz für Personenbeförderungsfahrzeuge, welcher auf einem sich länglich erstreckenden ersten Träger (1), auf dem ein erstes Sitzteil des Fahrgastsitzes befestigt ist, angeordnet ist, wobei
eine Adaptionseinheit (3, 4) vorgesehen ist, mittels welcher ein zweiter Träger (2), auf dem ein Sitzteil eines zweiten Fahrgastsitzes befestigt ist, mit dem ersten Träger verbindbar ist, dadurch gekennzeichnet, daß die Adaptionseinheit (3, 4) aus einem ersten Teil (3) und einem zweiten Teil (4) besteht, welche jeweils Mittel (5, 6) zum stirnseitigen Verbinden der beiden Teile (3, 4) aufweisen.

2. Fahrgastsitz nach Anspruch 1,
dadurch gekennzeichnet,
daß die Träger (1, 2) Kastenholme sind und die Adaptionseinheit (3, 4) formschlüssig in die Kastenholme einsteckbar ist.

3. Fahrgastsitz nach Anspruch 1 oder 2,
dadurch gekennzeichnet,
daß Mittel (7) vorgesehen sind, mittels der die beiden Teile (3, 4) der Adaptionseinheit gegen Verschieben gesichert sind.

4. Fahrgastsitz nach einem der Ansprüche 1 bis 3,
dadurch gekennzeichnet,
daß die sich gegenüberstehenden Stirnseiten der beiden Teile (3, 4) zu der den Sitz tragenden Oberfläche des Kastenholms etwa einen Winkel von 100 Grad aufweisen.

## Claims

1. A passenger seat for vehicles for conveying passengers, which is arranged on an elongatedly extending first carrier (1) on which a first seat portion of the passenger seat is fixed, wherein there is provided an adapter unit (3, 4) by means of which a second carrier (2) on which a seat portion of a second passenger seat is fixed can be connected to the first carrier, characterised in that the adapter unit (3, 4) comprises a first portion (3) and a second portion (4) which each have respective means (5, 6) for connecting the two portions (3, 4) at the ends.

2. A passenger seat according to claim 1 characterised in that the carriers (1, 2) are box beams and the adapter unit (3, 4) can be inserted into the box beams in positively locking relationship.

3. A passenger seat according to claim 1 or claim 2 characterised in that there are provided means (7) by means of which the two portions (3, 4) of the adapter unit are secured to prevent displacement thereof.

4. A passenger seat according to one of claims 1 to 3 characterised in that the mutually oppositely disposed ends of the two portions (3, 4) are approximately at an angle of 100° relative to the surface of the box beam, which carries the seat.

## Revendications

1. Siège de passager pour des véhicules de transport de personnes, qui est disposé sur un premier élément porteur (1) s'étendant longitudinalement, sur lequel est disposée une première partie de siège du siège de passager, une unité d'adaptation (3, 4) étant prévue, au moyen de laquelle un deuxième élément porteur (2), sur lequel est fixée une partie de siège d'un deuxième siège de passager, peut être assemblé au premier élément porteur,
**caractérisé** en ce que l'unité d'adaptation (3, 4) est constituée d'une première partie (3) et d'une deuxième partie (4), qui présentent des moyens respectifs (5, 6) pour assembler frontalement les deux parties (3, 4).

2. Siège de passager selon la revendication 1, **caractérisé** en ce que les éléments porteurs (1, 2) sont des longerons de caisson, et l'unité d'adaptation (3, 4) peut être emboîtée en engagement positif dans les longerons de caisson.

3. Siège de passager selon la revendication 1 ou 2, **caractérisé** en ce que des moyens (7) sont prévus, par lesquels les deux parties (3, 4) de l'unité d'adaptation sont bloquées en translation.

4. Siège de passager selon une des revendications 1 à 3, **caractérisé** en ce que les côtés frontaux en vis-à-vis des deux parties (3, 4) forment un angle d'environ 100 degrés avec la surface du longeron de caisson qui porte le siège.
